# EUROPÄISCHE PATENTSCHRIFT

(11) **EP 0 577 619 B1**
(45) Veröffentlichungstag und Bekanntmachung des Hinweises auf die Patenterteilung: **30.11.1994**
(21) Anmeldenummer: 92905632.3
(22) Anmeldetag: 04.03.1992
(51) Int. Cl.: B23Q 9/00

(54) **FÜHRUNGSPLATTE FÜR EINE HANDWERKZEUGMASCHINE**
GUIDE PLATE FOR A HAND-HELD POWER TOOL
PLATEAU DE GUIDAGE POUR MACHINE PORTATIVE

(30) Priorität: 26.03.1991 DE 4109839
(43) Veröffentlichungstag der Anmeldung: 12.01.1994
(73) Patentinhaber: ROBERT BOSCH GMBH, 70442 Stuttgart (DE)
(72) Erfinder: KLEIDER, Albert, D-7170 Schwäbisch Hall (DE)
(86) Internationale Anmeldenummer: DE9200184
(87) Internationale Veröffentlichungsnummer: WO9217314

(56) Entgegenhaltungen:
- AT-A- 0 347 107
- DE-U- 8 516 029
- US-A- 3 298 407
- US-A- 3 586 077

## Beschreibung

Die Erfindung geht aus von einer Führungsplatte für eine Handwerkzeugmaschine, insbesondere Winkelschleifmaschine, der im Oberbegriff des Anspruchs 1 definierten Gattung.

Bei einer bekannten Führungsplatte dieser Art für eine Handkreissäge (DE 30 07 310 C2) wird der Führungskanal von Lappen gebildet, die aus der Führungsplatte teilweise ausgestanzt und nach Ausstanzen aus der Plattenebene hochgebogen sind. Die Lappen verlaufen parallel in einem lichten Abstand voneinander, der geringfügig größer ist als die Breite der Führungsschiene, und bilden mit ihren etwa rechtwinklig zur Führungsplatte wegstehenden, einander zugekehrten Seitenflächen die Führungsflächen, deren Flächennormalen parallel zur Rotationsachse des Sägeblatts verlaufen. Die Lappen erstrecken sich praktisch über die gesamte Lange der Führungsplatte und lassen nur an den Enden der Führungsplatte Stege übrig. Zur größeren Steifigkeit der Führungsplatte können mehrere, auf die Länge des Führungskanals verteilte Brücken vorgesehen werden.

Um eine klemmfreie, leichtgängige und weitgehend spiellose Führung der Führungsplatte auf der Führungsschiene zur Gewährleistung enger Schnittoleranzen der Handkreissäge zu erzielen, müssen die ausgestanzten Lappen sehr exakt gebogen werden, um die geforderte enge Führungstoleranz des Führungskanals realisieren zu können. Dies verteuert den Herstellungsprozeß der Führungsplatte nicht unerheblich.

### Vorteile der Erfindung

Die erfindungsgemäße Führungsplatte mit den kennzeichnenden Merkmalen des Anspruchs 1 hat demgegenüber den Vorteil, daß durch die erfindungsgemäße Ausbildung des Führungskanals die Führungsplatte nur an zwei in möglichst großem Abstand voneinander entfernt liegenden Stellen mit jeweils relativ geringen axialen Abmessungen an der Führungsschiene geführt wird und damit ein klemmfreies, leichtgängiges Gleiten der Führungsplatte an der Führungsschiene sichergestellt ist. Das Führungsspiel kann mit wenig Nachbearbeitungsaufwand an den beiden Verengungen im Führungskanal sehr eng toleriert werden, was zu einer hohen Schnittgenauigkeit beim Arbeiten mit der Handwerkzeugmaschine führt.

Durch die in den weiteren Ansprüchen aufgeführten Maßnahmen sind vorteilhafte Weiterbildungen und Verbesserungen der im Anspruch 1 angegebenen Führungsplatte möglich.

Bei einer bevorzugten Ausführungsform der Erfindung sind dabei die beiden Verengungen im Führungskanal durch jeweils zwei einander gegenüberliegende Stege gebildet, die in der Plattenebene von den beiden Seiten einer Aussparung her einstückig von der Führungsplatte ausgehen und in die jeweilige Aussparung hineinragen. Die Führungsflächen werden von den einander gegenüberliegenden Stirnflächen dieser Stege gebildet. Durch diese Maßnahmen läßt sich die Führungsplatte sehr einfach herstellen, beispielsweise als preiswerte Blechkonstruktion ausführen. Die Führungsflächen werden gleichzeitig beim Stanzen mit hergestellt. Eine ggf. erforderliche Nachbearbeitung der Führungsflächen ist problemlos möglich und kostengünstig durchzuführen.

Bei einer weiteren Ausführungsform der Erfindung werden die beiden Verengungen im Führungskanal von jeweils einem im Querschnitt etwa U-förmigen Führungsstück aus Kunststoff gebildet, das in einer in den Sicken ausgebildeten Ausnehmung selbsthaltend eingesetzt ist. Die Führungsflächen werden dabei von den einander gegenüberliegenden Schenkelinnenflächen der Führungsstücke gebildet. Dies hat den Vorteil, daß die toleranzkritischen Führungsflächen aus dem Herstellungsprozeß der Führungsplatte herausgenommen sind und separat gefertigt werden. Bei Verschleiß der Führungsstücke können diese leicht und ohne Spezialwerkzeug ausgewechselt und damit das Bearbeitungsergebnis der Handwerkzeugmaschine wieder verbessert werden. Durch das bündige Einsetzen der beiden Führungsstücke in eigens dafür in jeder Sicke vorgesehene Ausnehmungen entsteht kein Schnittiefenverlust.

### Zeichnung

Die Zeichnung ist anhand von in der Zeichnung dargestellten Ausführungsbeispielen in der nachfolgenden Beschreibung näher erläutert. Es zeigen:
- Fig. 1: ausschnittweise eine Draufsicht einer Führungsplatte für eine Winkelschleifmaschine,
- Fig. 2: eine Seitenansicht der Führungsplatte gemäß Pfeil II in Fig. 1,
- Fig. 3: einen Schnitt der Führungsplatte längs der Linie III-III in Fig. 1,
- Fig. 4: einen Schnitt der Führungsplatte in Fig. 1 mit darunter angeordneter Führungsschiene gemäß Linie IV-IV in Fig. 1,
- Fig. 5: ausschnittweise eine Seitenansicht einer modifizierten Führungsplatte gemäß einem weiteren Ausführungsbeispiel.

### Beschreibung der Ausführungsbeispiele

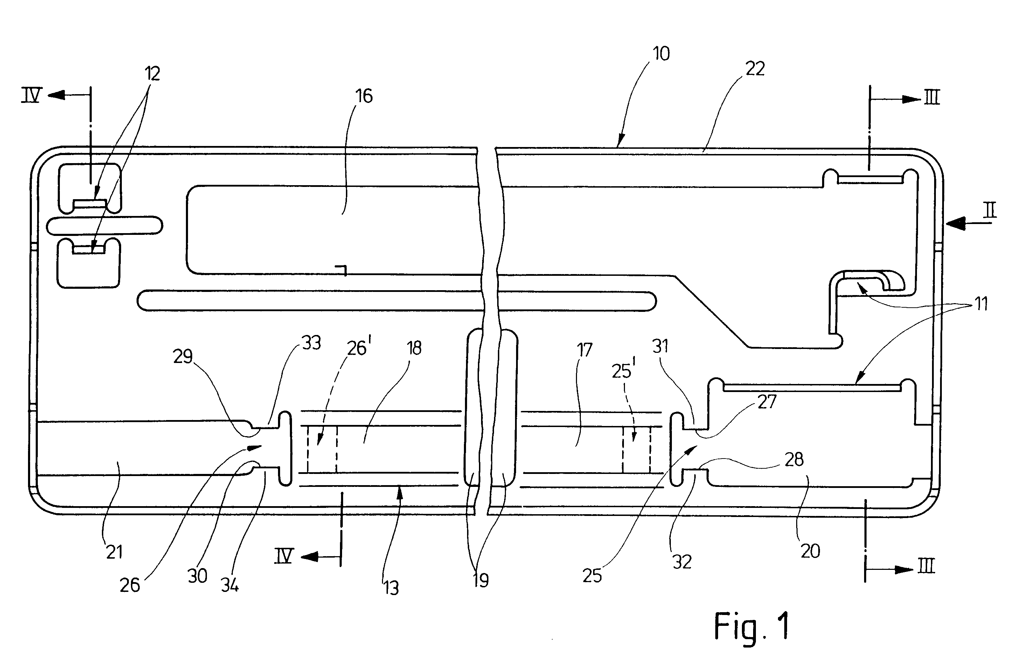

Die in Fig. 1 in Draufsicht und ausschnittweise dargestellte Führungsplatte 10 für eine Winkelschleifmaschine als Beispiel einer Handwerkzeugmaschine ist aus einer Blechplatte hergestellt und weist eine insgesamt mit 11 bezeichnete Halterung für die Winkelschleifmaschine sowie eine schlitzartige Öffnung 16 für den Durchtritt der Trennscheibe der Winkelschleifmaschine auf. Die Halterung 11 wird von verschiedenen Blechlappen gebildet, die aus der Plattenebene teilweise ausgestanzt und rechtwinklig abgebogen sind. In dieser, in dem einen Endbereich der Führungsplatte 10 ausgebildeten Halterung 11 ist die Winkelschleifmaschine pendelnd aufgenommen. Zusätzlich ist in dem gegenüberliegenden Endbereich der Führungsplatte 10 eine Befestigungsvorrichtung 12 für ein nicht dargestelltes Bogensegment vorgesehen. Diese Befestigungsvorrichtung 12 besteht wiederum aus zwei aus der Führungsplatte 10 teilweise ausgestanzten und hochgebogenen Blechlappen. Das Bogensegment ist am Gehäuse der Winkelschleifmaschine verstellbar befestigt. Durch Vergrößerung bzw. Verkleinerung der Bogenlänge zwischen Befestigungsvorrichtung 12 und dem Festlegepunkt des Bogensegments am Maschinengehäuse wird in bekannter Weise der durch die Öffnung 16 in der Führungsplatte 10 hindurchtretende Kreisabschnitt der Trennscheibe und damit die Schnittiefe der Trennscheibe eingestellt.

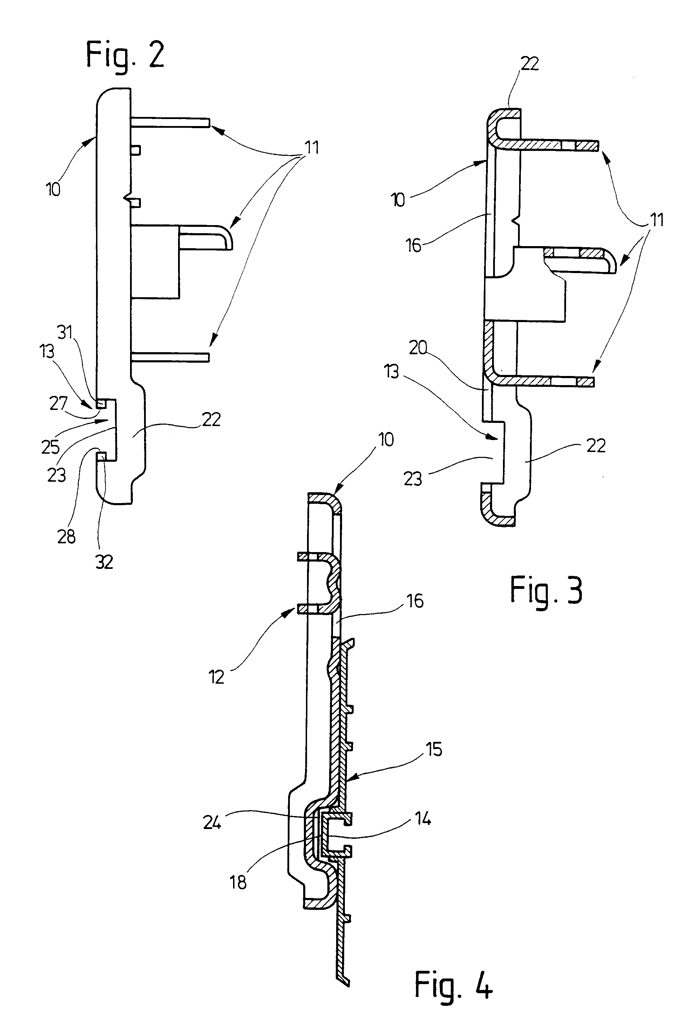

In der Führungsplatte 10 ist ein Führungskanal 13 ausgebildet, der mit einer Führungsschine 14 (Fig. 4) eine Führungseinrichtung zum Führen der Führungsplatte 10 und damit der Winkelschleifmaschine auf einem zu schneidenden Werkstück bildet. Die bevorzugt aus Profilaluminium hergestellte Führungsschiene 14 ist Teil eines Führungslineals 15, das mit seiner gut haftenden Unterseite auf das Werkstücke aufgelegt wird. Die Führungsplatte 10 wird auf das Führungslineal 15 aufgesetzt, wobei ihr Führungskanal 13 die Führungsschiene 14 übergreift. Die Oberseite des Führungslineals 15 bildet eine gute Gleitfläche für die Führungsplatte 10.

Der Führungskanal 13 wird von zwei im Abstand voneinander angeordneten, langgestreckten, brückenartigen Sicken 17,18 und von Aussparungen 19,20,21 in der Führungsplatte 10 gebildet. Die Aussparungen 19,20,21 fluchten mit den Sicken 17,18 und schließen sich unmittelbar an letztere an, und zwar auf deren beiden Seiten, so daß eine mittlere Aussparung 19 die beiden Sicken 17,18 auf den einander zugekehrten Seiten begrenzt und zwei äußere Aussparungen 20,21 von dem anderen Ende der Sicken 17,18 bis zum Ende der Führungsplatte 10 reichen. Für die Formsteifheit der Führungsplatte 10 ist aus der Plattenebene ein umlaufender Plattenrand 22 hochgebogen, der im Bereich der beiden Aussparungen 20,21 eine von der Unterseite her eingebrachter Ausnehmung 23 (Fig. 2 und 3) und 24 (Fig. 4) trägt. Die Tiefe der Ausnehmungen 23,24 ist entsprechend der lichten Höhe des Führungskanals 13 bemessen und ist größer als die über das Führungslineal 15 emporstehende Höhe der Führungsschiene 14. Die lichte Querabmessung des Führungskanals 13 ist ebenfalls größer bemessen als die Breite der Führungsschiene 14.

Für die Führung der Führungsplatte 10 längs der Führungsschiene 14 sind im Führungskanal 13 zwei Verengungen 25,26 mit geringen axialen Längenabmessungen vorgesehen, an denen paarweise zwei aneinander gegenüberliegende Führungsflächen 27,28 bzw. 29,30 ausgebildet sind, deren lichter Abstand geringfügig größer bemessen ist als die Breite der Führungsschiene 14. Jede Verengung 25,26 wird von zwei einander gegenüberliegenden Stegen 31,32 bzw. 33,34 gebildet, die von den beiden Seiten der Aussparung 20 bzw. 21 von der Führungsplatte 10 ausgehen und innerhalb der Plattenebene in die jeweilige Aussparung 20 bzw. 21 hineinragen. Die einander gegenüberliegenden Stirnflächen der Stege 31 - 34 bilden die Führungsflächen 27 - 30. Die Aussparungen 19 - 21 und die in der Plattenebene liegenden Stege 31 - 34 werden durch Ausstanzen der Führungsplatte 10 hergestellt.

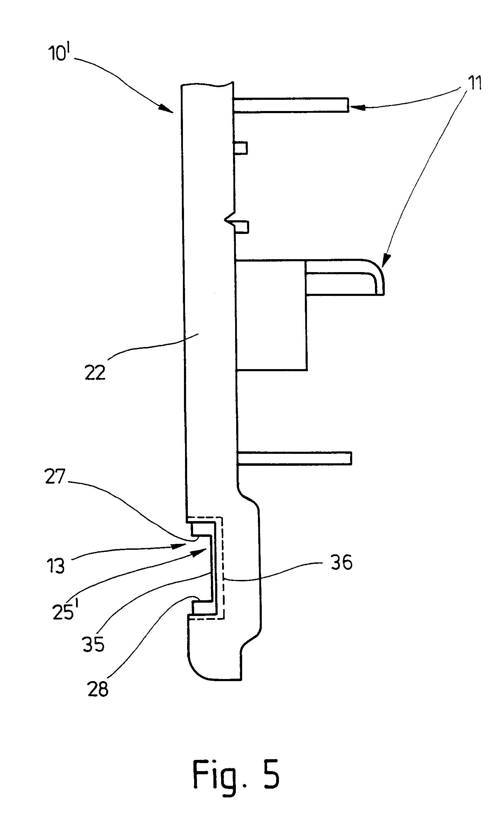

Die in Fig. 5 ausschnittweise in Seitenansicht dargestellte Führungsplatte 10' stimmt weitgehend mit der Führungsplatte 10 in Fig. 1 - 4 überein, so daß gleiche Bauteile mit gleichen Bezugszeichen versehen sind. Eine Modifikation besteht lediglich hinsichtlich der Ausbildung der Verengungen 25' und 26' im Führungskanal 13 und der dort vorgesehenen Führungsflächen. Die Stege 31 - 34 in den Aussparungen 20,21 sind entfallen, so daß diese Aussparungen 20,21 sich über ihre gesamte Länge mit konstanter Breite erstrecken. Die Verengungen 25',26' sind in die Sicken 17,18 verlegt und werden durch je ein Führungsstück 35 aus Kunststoff gebildet, wie dieses in Fig. 5 zu sehen ist. Aus Gründen der zeichnerischen Vereinfachung ist die Lage der Verengungen 25',26' in Fig. 1 strichliniert eingezeichnet, obwohl das Ausführungsbeispiel der Führungsplatte 10 gemäß Fig. 1 solche Verengungen in den Sicken 17,18 nicht aufweist. Die im Querschnitt U-förmigen Führungsstücke 35 sind in Ausnehmungen 36 selbsthaltend eingesetzt, die in den Sicken 17,18 am Ort der Verengungen 25',26' von unten her eingestochen sind. Bevorzugt werden dabei die Führungsstücke 35 eingeklipst, wobei zwei an den Stirnseiten vorhandene Widerhaken in entsprechenden Aussparungen in den Ausnehmungen 36 einrasten. Die Führungsflächen 27,28 (Fig. 5) sind an den beiden einander gegenüberliegenden Schenkelinnenflächen eines jeden Führungsstücks 35 ausgebildet.

## Patentansprüche

1. Führungsplatte (10) für eine Handwerkzeugmaschine, insbesondere Winkelschleifmaschine, zum Führen der Handwerkzeugmaschine längs einer auf einem Werkstück festgelegten Führungsschiene (14), mit einem Führungskanal (13) zum Übergreifen der Führungsschiene und mit im Führungskanal ausgebildeten Führungsflächen (27-30) zum Gleiten an den Seitenflächen der Führungsschiene, dadurch gekennzeichnet, daß der Führungskanal (13) von mindestens zwei im Abstand voneinander angeordneten, langgestreckten brückenartigen Sicken (17,18) und von mit diesen fluchtenden Aussparungen (19,20,21) in der Plattenebene gebildet ist, die sich auf beiden Seiten der Sicken (17,18) an diese unmittelbar anschließend erstrecken, daß der Führungskanal (13) eine gegenüber der Breite der Führungsschiene (14) größere lichte Abmessung aufweist und daß die Führungsflächen (27-30) paarweise an zwei im Abstand voneinander liegenden Verengungen (25,26;25',26') ausgebildet sind, deren lichte Weite geringfügig größer ist als die Breite der Führungsschiene (14).

2. Führungsplatte nach Anspruch 1, dadurch gekennzeichnet, daß die beiden Verengungen (25,26) im Führungskanal (13) durch jeweils zwei in der Plattenebene einander gegenüberliegende Stege (31-34) gebildet sind, die von den beiden Seiten einer Aussparung (20,21) ausgehend in die Aussparung (20,21) hineinragen, und daß die einander gegenüberliegenden Stirnflächen der Stege (31-34) die Führungsflächen (27-30) bilden.

3. Führungsplatte nach Anspruch 2, dadurch gekennzeichnet, daß die Aussparungen (19-21) und Stege (31-34) durch Ausstanzen der vorzugsweise aus Blech hergestellten Führungsplatte (10) gebildet sind.

4. Führungsplatte nach Anspruch 1, dadurch gekennzeichnet, daß die beiden Verengungen (25',26') im Führungskanal (13) von jeweils einem im Querschnitt etwa U-förmigen Führungsstück (35) aus Kunststoff gebildet sind, das in einer in den Sicken (17,18) ausgebildeten Ausnehmung (36) selbsthaltend eingesetzt ist, und daß die einander gegenüberliegenden Schenkelinnenflächen des Führungsstücks (35) die Führungsflächen (27,28) bilden.

5. Führungsplatte nach Anspruch 4, dadurch gekennzeichnet, daß die Führungsstücke (35) in die Ausnehmungen (36) eingeklipst sind.

6. Führungsplatte nach einem der Ansprüche 1 - 5, gekennzeichnet durch eine rechtwinklig von der Plattenebene abstehende Befestigungseinrichtung (11,12) für die Handwerkzeugmaschine und eine parallel zum Führungskanal (13) sich erstreckende, schlitzartige Öffnung (16) zum Durchtritt des rotierenden Schneidwerkzeugs, insbesondere der Trennscheibe.

## Claims

1. Guide plate (10) for a power hand tool, in particular an angle grinder, to guide the power hand tool along a guide rail (14) placed on a workpiece, with a guide channel (13) to embrace the guide rail and with guide surfaces (27-30) designed in the guide channel for sliding along the lateral surfaces of the guide rail, characterized by the fact that the guide channel (13) is formed by at least two lengthy bridge-type beads (17, 18) which are arranged at a distance from each other, and by recesses (19, 20, 21) in the plate plane which are aligned with these and which extend on both sides of the beads (17, 18), following on immediately from these, that the guide channel (13) has a greater clearance dimension in relation to the width of the guide rail (14) and that the guide surfaces (27-30) are designed in pairs on two necks (25,26;25',26') at a separation from each other, the clearance width of which is slightly larger than the width of the guide rail (14).

2. Guide plate in accordance with claim 1, characterized by the fact that the two necks (25,26) in the guide channel (13) are formed by two lands (31-34) which are opposite each other in the plate plane and which, starting from both sides of a recess (20,21) project into the recess (20,21) and that the front faces of the lands (31-34) which die opposite each other, form the guide faces (27-30).

3. Guide plate in accordance with claim 2, characterized by the fact that the recesses (19-21) and lands (31-34) are formed by punching out the guide plate (10) which is preferably made of sheet steel.

4. Guide plate in accordance with claim 1, characterized by the fact that the necks (25',26') in the guide channel (13) are formed by a plastic guide piece (35) in each case which has an approximately 'U' shaped cross-section, which is inserted so as to be self-retaining in a recess (36) which is formed in the beads (17, 18), and that the leg inner faces of the guide piece (35) which are opposite each other, form the guide faces (27, 28).

5. Guide plate in accordance with claim 4, characterized by the fact that the guide pieces (35) are clipped into the recesses (36).

6. Guide plate in accordance with one of the claims 1 - 5, characterized by a support (11, 12) which protrudes at right angles from the plate plane, for the power hand tool and by a slot-type opening (16) which extends parallel with the guide channel (13) for the penetration of the rotating cutting tool, in particular the cutting disc.

## Revendications

1. Plateau de guidage (10) pour une machine outil portative, en particulier meuleuse d'angle, pour guider la machine outil portative le long d'une glissière de guidage (14) fixée sur une pièce à usiner, avec un canal de guidage (13) pour venir en prise avec la glissière de guidage et avec des surfaces de guidage (27-30) constituées dans le canal de guidage pour glisser sur les surfaces latérales de la glissière de guidage, plateau de guidage caractérisé en ce que le canal de guidage (13) est formé d'au moins deux moulures (17,18) disposées à une certaine distance l'une de l'autre, s'étendant en longueur, en forme de pont et par des évidements (19,20,21) venant à fleur avec celles-ci dans le plan du plateau, évidements qui s'étendent des deux côtés des moulures (17,18) en se raccordant directement à celles-ci, en ce que le canal de guidage (13) présente une dimension libre plus grande par rapport à la largeur de la glissière de guidage (14) et en ce que les surfaces de guidage (27-30) sont formées par paire sur deux rétrécissements (25,26;25',26') se trouvant à une certaine distance l'un de l'autre, dont l'écartement libre est à peine plus grand que la largeur de la glissière de guidage (14).

2. Plateau de guidage selon la revendication 1, caractérisé en ce que les deux rétrécissements (25,26) dans le canal de guidage (13) sont formés par des languettes (31-34) qui se font vis-à-vis dans le plan du plateau, qui pénètrent dans un évidement (20,21) en partant des deux côtés de l'évidement (20,21) et en ce que les faces frontales se faisant vis-à-vis des languettes (31-34) forment les surfaces de guidage (27-30).

3. Plateau de guidage selon la revendication 2, caractérisé en ce que les évidements (19-21) et les languettes (31-34) sont formés par estampage du plateau de guidage (10) fabriqué de préférence en tôle.

4. Plateau de guidage selon la revendication 1, caractérisé en ce que les deux rétrécissements (25',26') dans le canal de guidage (13) sont formés par respectivement une pièce de guidage (35) en matière plastique qui a en section transversale à peu près la forme d'un U, pièce de guidage qui est insérée en s'accrochant dans un évidement (36) constitué dans les moulures (17,18) et en ce que les surfaces des ailes de la pièce de guidage (35) qui se font vis-à-vis forment les surfaces de guidage (27,28).

5. Plateau de guidage selon la revendication, caractérisé en ce que les pièces de guidage (35) sont fixées par enclipsage dans les évidements (36).

6. Plateau de guidage selon l'une des revendications 1 à 5, caractérisé par un dispositif de fixation (11,12) pour la machine outil portative se dressant à angle droit à partir du plan du plateau et une ouverture (16) s'étendant parallèlement au canal de guidage (13), en forme de fente, servant au passage de l'outil de coupe rotatif, en particulier du disque de tronçonnage.
